# EUROPEAN PATENT APPLICATION

(11) **EP 4 113 454 A1**
(43) Date of publication of application: **04.01.2023**
(21) Application number: 21196049.7
(22) Date of filing: 10.09.2021
(51) Int. Cl.: G06T 19/20, G06T 15/20

(54) **METHOD, SYSTEM AND RECORDING MEDIUM FOR GENERATING TRAINING DATA FOR DETECTION MODEL BASED ON ARTIFICIAL INTELLIGENCE**

(30) Priority: 30.06.2021 KR 20210086129
(71) Applicant: Airiss Co., Ltd., Daejeon 34068 (KR)
(72) Inventor: Kim, Jeong Mi, 35216 Daejeon (KR)
(74) Representative: RGTH

(57) **Abstract**

According to an aspect of the present disclosure, there is provided a method of generating training data related to an artificial intelligence-based detection model, which includes the steps of: generating three-dimensional (3D) model of a hidden target object and 3D model of a hiding tool object, respectively, and combining the 3D model of the hidden target object and the 3D model of the hiding tool object; generating a two-dimensional (2D) image by capturing, in at least one direction, the combined 3D model obtained by combining the 3D model of the hidden target object with the 3D model of the hiding tool object; and processing the generated 2D image with reference to deformation or distortion which occurs in a detection target image obtained by actually capturing a detection target object to be detected.

## Description

### CROSS-REFERENCE TO RELATED APPLICATION

This application claims priority to Korean Patent Application No. 10-2021-0086129 filed on June 30, 2021, the entire contents of which are herein incorporated by reference.

### TECHNICAL FIELD

The present disclosure relates to a method, a system, and a recording medium of generating training data for detection model based on an artificial intelligence.

### BACKGROUND

Recently, as research on artificial intelligence-related technologies such as a machine learning and a deep learning is actively conducted, many technologies for detecting a specific object from an image using such an artificial intelligence have been introduced.

Also in the field of security search, attempts are being made to detect a hidden target object (e.g., a knife, a bottle, a firearm, or the like) using such a technology based on artificial intelligence. However, techniques which has been introduced so far, including the above conventional technology, have limitations in that the techniques require a large amount of time and cost because pieces of video data for artificial intelligence learning are produced one by one through capturing. For example, when a learning video in which a pistol is hidden in a briefcase is made, it is necessary to capture an image of a briefcase while actually putting a pistol into the briefcase. In this case, the angle of the pistol may be manually adjusted one by one, which is significantly ineffective in terms of time and cost. In addition, the performance of an artificial intelligence-based detection model may vary depending on the diversity and volume of training data, and thus, in order to increase the performance of the artificial intelligence-based detection model, it is necessary to secure a large amount of training data containing various aspects.

Based on the above findings, the inventor(s) of the present disclosure proposes a technique of effectively generating a large number of pieces of training data in which various aspects of a hidden target object are included.

### SUMMARY

One object of the present disclosure is to solve all the above-described problems in the related art.

Another object of the present disclosure is to provide a method and a system to effectively generate a large number of pieces of training data in which various aspects of a hidden target object are included.

Yet another object of the present disclosure is to enhance the performance of an artificial intelligence-based detection model by increasing the diversity and volume of training data.

Representative configurations of the present disclosure are as follows.

According to one aspect of the present disclosure, there is provided a method of generating training data for a detection model based on an artificial intelligence, including the steps of: generating a three-dimensional (3D) model of a hidden target object and a 3D model of a hiding tool object, respectively, and combining the 3D model of the hidden target object and the 3D model of the hiding tool object; generating a two-dimensional (2D) image by capturing, in at least one direction, the combined 3D model obtained by combining the 3D model of the hidden target object and the 3D model of the hiding tool object; and processing the generated 2D image with reference to deformation or distortion which occurs in a detection target image obtained by actually capturing a detection target object to be detected.

According to another aspect of the present disclosure, there is provided a system of generating training data fora a detection model based on an artificial intelligence, which includes: a 3D model management unit configured to generate a 3D model of a hidden target object and each 3D model of a hiding tool object, respectively, and configured to combine the 3D model of the hidden target object and the 3D model of the hiding tool object; a training data generation unit configured to generate a 2D image by capturing, in at least one direction, the combined 3D model obtained by combining the 3D model of the hidden target object and the 3D model of the hiding tool object; and a training data processing unit configured to process the 2D image with reference to deformation or a distortion which occurs in a detection target image obtained by actually capturing a detection target object to be detected.

Further, there is provided another method and another system for implementing the present disclosure, and a non-transitory computer-readable recording medium having stored thereon a computer program for executing the aforementioned method.

According to the present disclosure, it is possible to effectively generate a large number of pieces of training data in which various aspects of a hidden target object are included.

Further, according to the present disclosure, it is possible to enhance the performance of an artificial intelligence-based detection model by increasing the diversity and the volume of training data.

### BRIEF DESCRIPTION OF THE DRAWINGS

FIG. 1 shows a detailed internal configuration of a system of generating training data for a detection model based on an artificial intelligence according to one embodiment of the present disclosure.
FIG. 2 shows a three-dimensional (3D) model of a hiding tool object generated according to one embodiment of the present disclosure.
FIG. 3 shows a 3D model of a hidden target object generated according to one embodiment of the present disclosure.
FIG. 4 shows combined 3D models obtained by combining (or synthesizing) the 3D model of the hiding tool object with the 3D model of the hidden target object according to one embodiment of the present disclosure, respectively.
FIG. 5 shows two-dimensional (2D) images captured from a combined 3D model according to one embodiment of the present disclosure.

### DETAILED DESCRIPTION

The following detailed description of the present disclosure will be provided with reference to the accompanying drawings that show, by way of illustration, specific embodiments in which the present disclosure may be practiced. These embodiments are described in sufficient detail to enable those skilled in the art to practice the present disclosure. It is to be understood that the various embodiments of the present disclosure, although different from each other, are not necessarily mutually exclusive. For example, specific shapes, structures and characteristics described herein may be implemented as modified from one embodiment to another without departing from the spirit and scope of the present disclosure. Furthermore, it shall be understood that the positions or arrangements of individual elements within each of the embodiments may also be modified without departing from the spirit and scope of the present disclosure. Therefore, the following detailed description is not to be taken in a limiting sense, and the scope of the present disclosure is to be taken as encompassing the scope of the appended claims and all equivalents thereof. In the drawings, like reference numerals refer to the same or similar elements throughout the several views.

Hereinafter, various preferred embodiments of the present disclosure will be described in detail with reference to the accompanying drawings to enable those skilled in the art to easily implement the present disclosure.

### Configuration of Training Data Generation System

An internal configuration of a training data generation system 100 which performs primary functions for the implementation of the present disclosure and functions of elements of the training data generation system 100 will be described below.

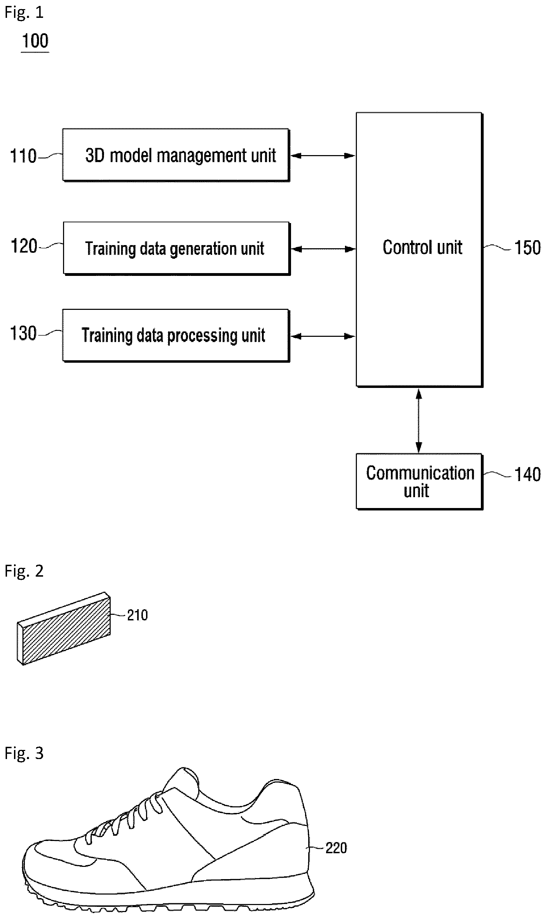

FIG. 1 shows a detailed internal configuration of the training data generation system 100 according to one embodiment of the present disclosure.

As shown in FIG. 1, the training data generation system 100 according to one embodiment of the present disclosure may be configured to include a three-dimensional (3D) model management unit 110, a training data generation unit 120, a training data processing unit 130, a communication unit 140, and a control unit 150. According to one embodiment of the present disclosure, at least some of the 3D model management unit 110, the training data generation unit 120, the training data processing unit 130, the communication unit 140, and the control unit 150 may be program modules that communicates with an external system (not shown). Such program modules may be included in the training data generation system 100 in the form of operating systems, application program modules, or other program modules and may be physically stored in a variety of commonly known storage devices. Further, such program modules may also be stored in a remote storage device that may communicate with the training data generation system 100. Meanwhile, such program modules may include, but not limited to, routines, subroutines, programs, objects, components, data structures, and the like for performing specific tasks or executing specific abstract data types which will be described below according to the present disclosure.

Although the training data generation system 100 is described as above, such a description is an example. As will be understood by those skilled in the art, at least some of the elements or functions of the training data generation system 100 may be implemented inside or included in an external system (not shown) as needed.

First, the 3D model management unit 110 according to one embodiment of the present disclosure may perform a function of generating 3D models of hidden target objects (e.g., a knife, a drug, a bomb, and the like) and 3D models of hiding tool objects (e.g., a footwear, a bag, and the like). For example, a 3D model of a hidden target object and a 3D model of a hiding tool object may be generated by capturing images of the hidden target object and the hiding tool object using a certain capturing apparatus. A 3D CT (Computed Tomography) scanner may be used as the such capturing apparatus. Further, for example, a 3D model generated through the capturing by the 3D CT scanner, may include visual information about an internal structure and an external structure of the hidden target object or the hiding tool object.

FIG. 2 shows a 3D model of a hiding tool object generated according to one embodiment of the present disclosure.

FIG. 3 shows a 3D model of a hidden target object generated according to one embodiment of the present disclosure.

Referring to FIGS. 2 and 3, a 3D model 210 of the hidden target object may be generated by 3D CT scanning a hidden object having a rectangular parallelepiped shape as a hidden target object, and a 3D model 220 of the hiding tool object may be generated by 3D CT scanning a footwear as a hiding tool object to generate.

Further, the 3D model management unit 110 according to one embodiment of the present disclosure may be configured to combine or synthesize the 3D model of the hidden target object and the 3D model of the hiding tool object, which are generated in the above-described manner, according to at least one aspect.

Specifically, according to one embodiment of the present disclosure, the 3D model management unit 110 may provide a user interface configured to assist a user to be able to combine or synthesize the 3D models with each other. As an example, the user may combine or synthesize the 3D model of the hidden target object and the 3D model of the hiding tool object in various aspects while manipulating the 3D model of the hidden target object and the 3D model of the hiding tool object. As another example, the user may change at least one of a size, shape, and position of the 3D model of the hidden target object, which is to be combined with the 3D model of the hiding tool object. As yet another example, when combining or synthesizing the 3D model of the hiding tool object and the 3D model of the hidden target object, the user may change a positional relationship (direction, angle, or the like) between the 3D model of the hiding tool object and the 3D model of the hidden target object in various ways.

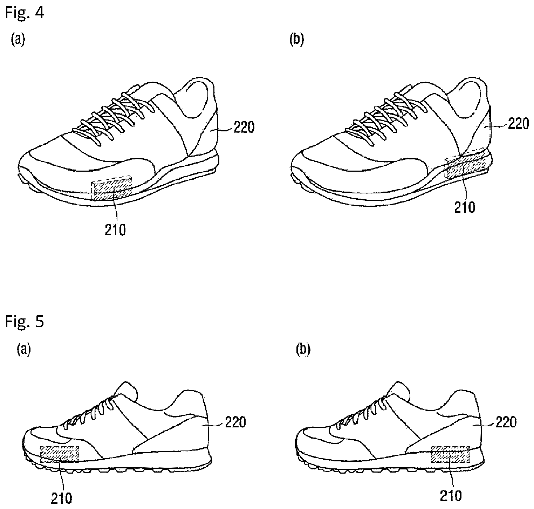

FIG. 4 shows combined 3D models generated by combining (or synthesizing) a 3D model of a hiding tool object and a 3D model of a hidden target object according to one embodiment of the present disclosure.

As shown in FIG. 4, the combined 3D models in which the 3D model 210 of the hidden target object is hidden on each of the toe side (see FIG. 4 (a)) and the heel side (see FIG. 4 (b)) in a 3D model 220 of a footwear as the hiding tool object, may be generated.

Here, configurations of the generation and combination of the 3D models according to one embodiment of the present disclosure are not limited to the above example, and may be changed in various manners as long as the objects of the present disclosure can be accomplished. Further, a 3D CT scanner is used as a capturing apparatus used to generate the 3D model, but other capturing apparatuses than the 3D CT scanner may be also used.

The training data generation unit 120 according to one embodiment of the present disclosure may perform a function of generating a 2D image by capturing, in at least one direction, an image of a combined 3D model obtained by combining the 3D model of the hidden target object and the 3D model of the hiding tool object.

Specifically, the 2D image may be provided such that an image obtained by revealing the combined 3D model obtained by combining the 3D model of the hiding tool object and the 3D model of the hidden target object in a perspective way is included. An aspect included in the 2D image may vary depending on the capturing direction. For example, according to one embodiment of the present disclosure, the 2D image may be an image captured through a virtual capturing method which is simulated in the same manner as in an X-RAY scanning method (to be described later).

According to one embodiment of the present disclosure, the 2D image may be obtained in the form of a 16 bit-grey scale having two kinds of output energies without a separate distortion process, such as resolution degradation or RGB change.

FIG. 5 shows 2D images captured from the combined 3D model according to one embodiment of the present disclosure.

Referring to FIG. 5, the training data generation unit 120 may capture a 2D perspective image of various types of combined 3D models related to a footwear in which a hidden object is hidden and may generate training data about the footwear in which the hidden object is embedded.

The training data processing unit 130 according to one embodiment of the present disclosure may process the 2D image generated in the above manner with reference to deformation or distortion that may occur in a detection target image obtained by actually capturing a detection target object to be detected. According to one embodiment of the present disclosure, the deformation or distortion may include deformation or distortion that may occur in the captured image according to a positional relationship between the detection target object and a capturing apparatus for capturing the detection target object or a distance therebetween due to characteristics of the capturing apparatus that has light beams emitted in a radial manner. Due to such deformation or distortion, captured images may be displayed in different forms even for the same article.

Specifically, the training data processing unit 130 according to one embodiment of the present disclosure may process a 2D image in a manner that the distortion or the deformation detected from at least one detection target image obtained by actually capturing the detection target object as described above is included in the 2D image.

For example, the training data processing unit 130 according to one embodiment of the present disclosure may predict deformation or distortion that may occur in a 2D image captured from a 3D model by using a separate artificial intelligence-based prediction model which is learned based on a position of a detection target object in a detection target image, a positional relationship between the detection target object and the apparatus for capturing the detection target object, specification information of the apparatus for capturing the detection target object, and data about the deformation or distortion that occurs in the detection target image, and may process the 2D image by adding the predicted deformation or distortion to the 2D image.

The training data processing unit 130 according to one embodiment of the present disclosure may process the 2D image with reference to differences between a capturing apparatus (e.g., a 3D CT scanner) used to generate the 3D model of the hidden target object and the 3D model of the hiding tool object and a capturing apparatus (e.g., an X-ray scanner) for actually capturing a detection target object.

Specifically, according to one embodiment of the present disclosure, the capturing apparatus used in capturing the hidden target object and the hiding tool object may be a CT scanner, and the capturing apparatus used in capturing the detection target object may be an X-ray scanner. The CT scanner, which employs a computer tomography method, projects x-rays or ultrasonic waves onto a human body at various angles and reconfigurates the projection results with a computer to process an internal cross section of the detection target object as an image. The X-ray scanner measures a degree to which the X-rays attenuates as they pass through the detection target object to display an internal structure of the detection target object as an image. Accordingly, the types of electromagnetic waves used in both the capturing apparatuses may be different from each other, and differences may occur in the capturing techniques and the imaging results. Such differences may be used as a reference in a step of processing the 2D image.

For example, the training data processing unit 130 according to one embodiment of the present disclosure may determine a visual effect to be added to a 2D image captured from a 3D model by using a separate artificial intelligence-based determination model that is learned based on data about the capturing apparatus used to generate the 3D model of the hidden target object and the 3D model of the hiding tool object, data about the capturing apparatus for actually capturing the detection target object, data about a difference between the 2D image captured from the 3D model and an image of the detection target object, and may process the 2D image by adding the determined visual effect to the 2D image.

Further, the training data processing unit 130 according to one embodiment of the present disclosure may process a 2D image with reference to at least one of specification information and identification information of the capturing apparatus for capturing the detection target object.

For example, the training data processing unit 130 according to one embodiment of the present disclosure may determine a visual effect to be added to a 2D image captured from a 3D model by using a separate artificial intelligence-based determination model that is learned based on data about specification information and identification information of the capturing apparatus used to generate the 3D model of the hidden target object and the 3D model of the hiding tool object, and data about a difference between the 2D image captured from the 3D model and an image of the detection target object, and may process the 2D image by adding the determined visual effect to the 2D image.

Further, according to one embodiment of the present disclosure, the 2D image generated and processed as above may be used as training data of the artificial intelligence-based detection model.

Specifically, according to one embodiment of the present disclosure, the artificial intelligence-based detection model may be learned to detect a hidden target object from a 2D image related to the hidden target object based on at least one 2D image (i.e., training data) in which aspects of the hidden target object and a hiding tool object are included.

The communication unit 140 according to one embodiment of the present disclosure may perform a function to enable data transmission and reception from/to the 3D model management unit 110, the training data generation unit 120, and the training data processing unit 130.

The control unit 150 according to one embodiment of the present disclosure may function to control data flow among the 3D model management unit 110, the training data generation unit 120, the training data processing unit 130, and the communication unit 140. That is, the control unit 150 according to the present disclosure may control data flow of the training data generation system 100 from into/out of the training data generation system 100 or data flow among the elements of the training data generation system 100, so that the 3D model management unit 110, the training data generation unit 120, the training data processing unit 130, and the communication unit 140 may carry out their particular.

The method of generating and processing the training date of the artificial intelligence-based detection model according to one embodiment of the present disclosure is not limited to the above-described examples, and may be varied in other various manners as long as the objects of the present disclosure can be achieved.

The embodiments according to the present disclosure as described above may be implemented in the form of program instructions that can be executed by various computer components, and may be stored on a computer-readable recording medium. The computer-readable recording medium may include program instructions, data files, and data structures, separately or in combination. The program instructions stored on the computer-readable recording medium may be specially designed and configured for the present disclosure, or may also be known and available to those skilled in the computer software field. Examples of the computer-readable recording medium may include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler, but also high-level language codes that can be executed by a computer using an interpreter. The above hardware devices may be changed to one or more software modules to perform the processes of the present disclosure, and vice versa.

Although the present disclosure has been described above in terms of specific items such as detailed elements as well as the limited embodiments and the drawings, they are only provided to help more general understanding of the present disclosure, and the present disclosure is not limited to the above embodiments. It will be appreciated by those skilled in the art to which the present disclosure pertains that various modifications and changes may be made from the above description.

Therefore, the spirit of the present disclosure shall not be limited to the above-described embodiments, and the entire scope of the appended claims and their equivalents will fall within the scope and spirit of the present disclosure.

## Claims

1. A method of generating training data for detection model based on an artificial intelligence, comprising the steps of:
generating a three-dimensional (3D) model of a hidden target object and a 3D model of a hiding tool object, respectively, and combining the 3D model of the hidden target object and the 3D model of the hiding tool object;
generating a two-dimensional (2D) image by capturing, in at least one direction, the combined 3D model obtained by combining the 3D model of the hidden target object and the 3D model of the hiding tool object; and
processing the generated 2D image with reference to deformation or distortion which occurs in a detection target image obtained by actually capturing a detection target object to be detected.

2. The method according to Claim 1, wherein the deformation or the distortion includes deformation or distortion that occurs in the detection target image according to a positional relationship between the detection target object and a capturing apparatus for capturing the detection target object.

3. The method according to Claim 1 or 2, wherein the combined 3D model is generated by combining the 3D model of the hidden target object and the 3D model of the hiding tool object, which are generated independently of each other, according to at least one aspect.

4. The method according to Claim 3, wherein at least one of a size, a shape, and a position of the 3D model of the hidden target object, which is combined with the 3D model of the hiding tool object, is changed.

5. The method according to one of Claims 1 to 4, wherein in the processing of the generated 2D image, the 2D image is processed in a manner that the distortion or the deformation is included in the 2D image.

6. The method according to one of Claims 1 to 5, wherein in the processing of the generated 2D image, the 2D image is processed with reference to a difference between a capturing apparatus used to generate the 3D model of the hidden target object and the 3D model of the hiding tool object and a capturing apparatus for capturing the detection target object.

7. The method according to one of Claims 1 to 6, wherein in the processing of the generated 2D image, the 2D image is processed with reference to at least one of specification information and identification information of a capturing apparatus for capturing the detection target object.

8. A non-transitory computer-readable recording medium having stored thereon a computer program for executing the method according to one of Claims 1 to 7.

9. A system of generating training data for detection model based on an artificial intelligence, comprising:
a 3D model management unit configured to generate a 3D model of a hidden target object and a 3D model of a hiding tool object, respectively, and combine the 3D model of the hidden target object and the 3D model of the hiding tool object;
a training data generation unit configured to generate a 2D image by capturing, in at least one direction, the combined 3D model obtained by combining the 3D model of the hidden target object and the 3D model of the hiding tool object; and
a training data processing unit configured to process the 2D image with reference to deformation or a distortion which occurs in a detection target image obtained by actually capturing a detection target object to be detected.

10. The system according to Claim 9, wherein the deformation or the distortion includes deformation or distortion that occurs in the detection target image according to a positional relationship between the detection target object and a capturing apparatus for capturing the detection target object.

11. The system according to Claim 9 or 10, wherein the combined 3D model is generated by combining the 3D model of the hidden target object and the 3D model of the hiding tool object, which are generated independently of each other, according to at least one aspect.

12. The system of Claim 11, wherein at least one of a size, a shape, and a position of the 3D model of the hidden target object, which is combined with the 3D model of the hiding tool object, is changed.

13. The system according to one of Claims 9 to 12, wherein the training data processing unit processes the 2D image in a manner that the distortion or the deformation is included in the 2D image.

14. The system according to one of Claims 9 to 13, wherein the training data processing unit processes the 2D image with reference to a difference between a capturing apparatus used to generate the 3D model of the hidden target object and the 3D model of the hiding tool object and a capturing apparatus for capturing the detection target object.

15. The system according to one of Claims 9 to 14, wherein the training data processing unit processes the 2D image with reference to at least one of specification information and identification information of a capturing apparatus for capturing the detection target object.
